# EUROPÄISCHE PATENTANMELDUNG

(11) **EP 3 070 996 A1**
(43) Veröffentlichungstag der Anmeldung: **21.09.2016**
(21) Anmeldenummer: 16156310.1
(22) Anmeldetag: 18.02.2016
(51) Int. Cl.: H05B 6/06

(54) **KOCHFELDVORRICHTUNG**

(30) Priorität: 17.03.2015 ES 201530345
(71) Anmelder: BSH Hausgeräte GmbH, 81739 München (DE)
(72) Erfinder: Aranda Vazquez, Sandra, 50018 Zaragoza (ES); Elena Valero, Laura, 50009 Zaragoza (ES); Imaz Martinez, Eduardo, 31500 Tudela (Navarra) (ES); Martin Gomez, Damaso, 20012 Zaragoza (ES); Marzo Alvarez, Teresa Del Carmen, 50012 Zaragoza (ES); Paesa García, David, 50015 Zaragoza (ES); Villanueva Valero, Beatriz, 44500 Andorra Teruel (ES)

(57) **Zusammenfassung**

Die Erfindung geht aus von einer Kochfeldvorrichtung (10) mit zumindest einem Wellenleiter (12) und mit zumindest einer Verbindungseinheit (14), die dazu vorgesehen ist, ein Ende des Wellenleiters (12) in einer Umgebung eines Infrarot-Sensors (16) zu fixieren.

Um eine gattungsgemäße Vorrichtung mit verbesserten Eigenschaften hinsichtlich einer Detektion von elektromagnetischer Strahlung bereitzustellen, wird vorgeschlagen, dass die Verbindungseinheit (14) dazu vorgesehen ist, das Ende des Wellenleiters (12) in einem Abstand von maximal 4 mm zu dem Infrarot-Sensor (16) zu fixieren.

## Beschreibung

Die Erfindung geht aus von einer Kochfeldvorrichtung nach dem Oberbegriff des Patentanspruchs 1 und von einem Verfahren zur Montage einer Kochfeldvorrichtung nach dem Oberbegriff des Patentanspruchs 11.

Aus dem Stand der Technik ist bereits eine Kochfeldvorrichtung mit einem Wellenleiter und einer Verbindungseinheit bekannt, die an einem Ende des Wellenleiters angeordnet ist. Der Wellenleiter und die Verbindungseinheit bilden gemeinsam ein standardisiertes Kabel aus, beispielsweise einen LC Connector und/oder einen FC Connector und/oder einen SC Connector oder einen ST Connector. Ein Infrarot-Sensor der Kochfeldvorrichtung weist zu einer Kontaktierung der Verbindungseinheit ein Kontaktierungselement auf. Die Verbindungseinheit fixiert das Ende des Wellenleiters in einem Abstand von im Wesentlichen 5 mm zu dem Infrarot-Sensor, und zwar zu einem Detektionsbereich des Infrarot-Sensors.

Die Aufgabe der Erfindung besteht insbesondere darin, eine gattungsgemäße Vorrichtung mit verbesserten Eigenschaften hinsichtlich einer Detektion von elektromagnetischer Strahlung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einem Wellenleiter und mit zumindest einer Verbindungseinheit, die dazu vorgesehen ist, ein Ende des Wellenleiters in einer Umgebung eines Infrarot-Sensors zu fixieren.

Es wird vorgeschlagen, dass die Verbindungseinheit dazu vorgesehen ist, das Ende des Wellenleiters in einem Abstand von maximal 4 mm, insbesondere von maximal 3 mm, vorteilhaft von maximal 2 mm, besonders vorteilhaft von maximal 1,5 mm, vorzugsweise von maximal 1 mm, besonders vorzugsweise von maximal 0,8 mm, bevorzugt von maximal 0,5 mm und besonders bevorzugt von maximal 0,3 mm zu dem Infrarot-Sensor zu fixieren. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Unter einem "Wellenleiter" soll insbesondere ein Element verstanden werden, das dazu vorgesehen ist, elektromagnetische Strahlung, insbesondere sichtbares Licht und/oder Infrarot-Strahlung, vorteilhaft sowohl sichtbares Licht als auch Infrarot-Strahlung, in Längsrichtung des Wellenleiters zu transmittieren, insbesondere zu transportieren, insbesondere über Totalreflexionen innerhalb des Wellenleiters. Insbesondere ist der Wellenleiter dazu vorgesehen, ein Eintreten und/oder Austreten zumindest von elektromagnetischer Strahlung in zumindest im Wesentlichen senkrecht zu der Längsrichtung ausgerichteten Richtungen zumindest im Wesentlichen zu verhindern. Unter einem "Ende" des Wellenleiters soll insbesondere eine Kante des Wellenleiters verstanden werden, welche in einem abgewickelten Zustand senkrecht zu einer Längserstreckung des Wellenleiters ausgerichtet ist. Unter einer "Längserstreckung" eines Objekts soll insbesondere eine Länge einer längsten Seite eines kleinsten gedachten das Objekt gerade noch umschließenden Quaders verstanden werden. Unter "Infrarot-Strahlung" soll insbesondere elektromagnetische Strahlung aus einem Wellenlängenbereich von 180 nm bis 0,3 mm verstanden werden. Unter einer "Verbindungseinheit" soll insbesondere eine Einheit verstanden werden, die dazu vorgesehen ist, eine mechanische Verbindung zwischen dem Ende des Wellenleiters und zumindest einer Leiterplatte herzustellen, auf welcher der Infrarot-Sensor in wenigstens einem montierten Zustand insbesondere angeordnet ist. Die Verbindungseinheit ist vorzugsweise aus wenigstens einem elektrisch isolierenden Material ausgebildet. Insbesondere könnte die Verbindungseinheit aus wenigstens einem Kunststoff, wie beispielsweise aus Polyamid, insbesondere Polyamid PA6.6 und/oder Polyamid PA6, und/oder aus Polypropylen ausgebildet sein. Beispielsweise könnte die Verbindungseinheit zumindest zwei Baueinheiten aufweisen, welche kraftschlüssig und/oder formschlüssig miteinander verbunden sein könnten. Vorteilhaft weist die Verbindungseinheit zumindest zwei Baueinheiten auf, welche stoffschlüssig miteinander verbunden und insbesondere einstückig aneinander angeformt sind. Insbesondere ist die Verbindungseinheit einstückig ausgebildet. Insbesondere umfasst die Kochfeldvorrichtung zumindest eine Leiterplatte. Der Infrarot-Sensor ist in wenigstens einem montierten Zustand insbesondere an der Leiterplatte befestigt und insbesondere mittels einer elektrisch leitenden Verbindung mit der Leiterplatte, insbesondere mit einer Leiterbahn der Leiterplatte, kontaktiert. Hierbei ist der Infrarot-Sensor insbesondere an der Leiterplatte angelötet. Unter einer "Leiterplatte" soll insbesondere ein Bauteil verstanden werden, das in wenigstens einem montierten Zustand zu einer insbesondere elektrischen Verbindung von elektrischen Komponenten und/oder zu einer insbesondere mechanischen Befestigung von elektrischen Komponenten vorgesehen ist und vorteilhaft eine Gewichtskraft der elektrischen Komponenten wenigstens zu einem Großteil trägt und/oder an ein weiteres Bauteil, wie beispielsweise eine Gehäuseeinheit, weiterleitet. Die Leiterplatte ist insbesondere wenigstens zu einem Großteil aus zumindest einem isolierenden Material ausgebebildet, wobei verschiedene Materialien denkbar sind, wie beispielsweise FR1, FR2, FR3, FR4, FR5, CEM-1, CEM-3 und/oder Teflon. Die Kochfeldvorrichtung umfasst insbesondere zumindest einen Infrarot-Sensor, insbesondere zumindest den Infrarot-Sensor. Unter einem "Infrarot-Sensor" soll insbesondere ein Sensor verstanden werden, welcher zumindest einen IR-empfindlichen Detektor aufweist und/oder welcher dazu vorgesehen ist, zumindest eine Intensität und/oder Wellenlänge von einfallender Infrarot-Strahlung zu detektieren. Der Detektor des Infrarot-Sensors und/oder ein Detektionsbereich des Infrarot-Sensors sind/ist insbesondere an einem dem Wellenleiter in wenigstens einem montierten Zustand zugewandten Endbereich angeordnet, wobei der Detektor und/oder der Detektionsbereich einen geringsten Abstand, insbesondere bei Betrachtung sämtlicher Punkte des Infrarot-Sensors, zu dem Wellenleiter aufweisen. Der Infrarot-Sensor ist insbesondere frei von einem Kontaktelement zu einer Kontaktierung und/oder zu einem Anschluss eines standardisierten Kabels. Hierbei soll unter einem "Sensor" insbesondere zumindest ein Element verstanden werden, das zumindest einen Detektor zu einer Detektion wenigstens einer Sensorkenngröße aufweist und das dazu vorgesehen ist, einen die Sensorkenngröße kennzeichnenden Wert auszugeben, wobei es sich bei der Sensorkenngröße vorteilhaft um eine physikalische und/oder chemische Größe handelt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine Detektion von elektromagnetischer Strahlung und damit verbunden insbesondere eine Temperaturermittlung und/oder eine Erkennung einer Bedieneingabe verbessert werden. Insbesondere kann auf standardisierte Kabel verzichtet werden, wodurch insbesondere geringe Kosten erzielt werden können. Darüber hinaus kann ein hohes Preis-Leistungs-Verhältnis für einen Kunden und/oder Bediener ermöglicht werden. Die Verbindungseinheit ist insbesondere eine nichtstandardisierte Eigenkreation, wodurch insbesondere eine hohe konstruktive Flexibilität erreicht werden kann, wobei insbesondere spezielle Bedürfnisse jederzeit eingearbeitet werden können.

Ferner wird vorgeschlagen, dass die Verbindungseinheit zumindest ein wenigstens im Wesentlichen trichterförmiges Fixierungselement aufweist, das dazu vorgesehen ist, den Wellenleiter in einer Position relativ zu dem Infrarot-Sensor zu halten. Unter einem "wenigstens im Wesentlichen trichterförmigen" Fixierungselement soll insbesondere ein Fixierungselement mit einer Gestalt verstanden werden, die mit einem Massen- und/oder Volumenanteil von maximal 30 %, insbesondere von maximal 20 %, vorteilhaft von maximal 10 % und besonders vorteilhaft von maximal 5 % von einer trichterförmigen Gestalt abweicht. Unter einem "Fixierungselement" soll insbesondere ein Element verstanden werden, das dazu vorgesehen ist, eine Bewegung des Endes des Wellenleiters auf eine Strecke von maximal 0,9 mm, insbesondere von maximal 0,7 mm, vorteilhaft von maximal 0,5 mm, besonders vorteilhaft von maximal 0,3 mm und vorzugsweise von maximal 0,1 mm zu begrenzen. Dadurch kann insbesondere eine einfache Herstellung und/oder Montage ermöglicht werden.

Der Wellenleiter könnte beispielsweise kraftschlüssig und/oder formschlüssig in dem Fixierungselement gehalten sein. Vorzugsweise ist der Wellenleiter stoffschlüssig in dem Fixierungselement gehalten, wodurch insbesondere eine hohe Stabilität und/oder eine sichere Fixierung des Endes des Wellenleiters in dem Abstand zu dem Infrarot-Sensor erzielt werden kann.

Weiterhin wird vorgeschlagen, dass das Fixierungselement um den Wellenleiter herum mit einer Haltemasse aufgefüllt ist. Die Kochfeldvorrichtung umfasst insbesondere zumindest eine Haltemasse, vorteilhaft zumindest die Haltemasse. Insbesondere ist die Haltemasse dazu vorgesehen, den Wellenleiter und das Fixierungselement stoffschlüssig miteinander zu verbinden, insbesondere miteinander zu verkleben. Beispielsweise könnte die Haltemasse wenigstens teilweise aus Harz und/oder aus Silikon bestehen. Dadurch kann insbesondere eine stabile Konstruktion bereitgestellt werden.

Ferner wird vorgeschlagen, dass der Wellenleiter und die Verbindungseinheit wenigstens teilweise eine Vormontageeinheit ausbilden. Insbesondere erfolgt eine Herstellung einer Verbindung zwischen dem Wellenleiter und der Verbindungseinheit vor einer Befestigung der Verbindungseinheit an der Leiterplatte und/oder dem Infrarot-Sensor. Beispielsweise könnte die Vormontageeinheit, insbesondere der Wellenleiter und die Verbindungseinheit, in einem separaten Montageverfahren herstellgestellt sein und vorteilhaft als separate Einheit an einen Endnutzer verkäuflich sein. Unter der Wendung, dass der Wellenleiter und die Verbindungseinheit "wenigstens teilweise" eine Vormontageeinheit ausbilden, soll insbesondere verstanden werden, dass der Wellenleiter und die Verbindungseinheit gemeinsam mit zumindest einer weiteren Baueinheit, wie insbesondere der Haltemasse, die Vormontageeinheit ausbilden. Dadurch kann insbesondere ein separater Verkauf der Vormontageeinheit ermöglicht und/oder eine Möglichkeit eines Verkaufs als Ersatzteil geschaffen werden.

Der Infrarot-Sensor könnte beispielsweise einen Aufbau aufweisen, welcher einen Detektionsbereich des Infrarot-Sensors umgeben und dazu vorgesehen sein könnte, wenigstens einen Teil der Verbindungseinheit aufzunehmen und insbesondere an dem Infrarot-Sensor zu befestigen. Vorzugsweise weist die Verbindungseinheit zumindest einen Aufnahmebereich auf, der vorgesehen ist, den Infrarot-Sensor wenigstens zu einem Großteil aufzunehmen. Unter der Wendung, dass der Aufnahmebereich dazu vorgesehen ist, den Infrarot-Sensor "wenigstens zu einem Großteil" aufzunehmen, soll insbesondere verstanden werden, dass der Aufnahmebereich dazu vorgesehen ist, den Infrarot-Sensor zu einem Massenanteil und/oder Volumenanteil von mindestens 70 %, insbesondere von mindestens 80 %, vorteilhaft von mindestens 90 % und vorzugsweise von mindestens 95 % aufzunehmen. Dadurch können/kann insbesondere eine verlustfreie Übertragung von elektromagnetischer Strahlung zwischen dem Wellenleiter und dem Infrarot-Sensor und/oder eine sichere Lagerung des Infrarot-Sensors erreicht werden.

Weiterhin wird vorgeschlagen, dass die Verbindungseinheit zumindest ein Abschirmelement aufweist, das dazu vorgesehen ist, den Infrarot-Sensor in einem montierten Zustand optisch gegenüber einer Umgebung wenigstens teilweise abzuschirmen. Insbesondere ist die Verbindungseinheit, insbesondere das Abschirmelement, dazu vorgesehen, einen Kontaktbereich und/oder Übergangsbereich zwischen dem Ende des Wellenleiters und dem Infrarot-Sensor zumindest gegen Hintergrundstrahlung wenigstens teilweise abzuschirmen. Unter der Wendung, dass die Verbindungseinheit und/oder das Abschirmelement dazu vorgesehen sind/ist, den Infrarot-Sensor in einem montierten Zustand optisch gegenüber einer Umgebung "wenigstens teilweise abzuschirmen", soll insbesondere verstanden werden, dass die Verbindungseinheit und/oder das Abschirmelement gemeinsam mit zumindest einer weiteren Baueinheit, wie beispielsweise mit der Leiterplatte, dazu vorgesehen sind/ist, den Infrarot-Sensor wenigstens im Wesentlichen abzuschirmen und insbesondere einen Anteil von mindestens 90 %, insbesondere von mindestens 95 %, vorteilhaft von mindestens 98 % und vorzugsweise von mindestens 99 % von auftreffender elektromagnetischer Strahlung, insbesondere in Form von Hintergrundstrahlung, zu reflektieren und/oder zu absorbieren und vorzugsweise an einem Erreichen des Infrarot-Sensors zu hindern. Insbesondere ist die Verbindungseinheit zumindest für Hintergrundstrahlung wenigstens im Wesentlichen intransparent ausgebildet. Die Verbindungseinheit ist insbesondere aus wenigstens einem zumindest für Hintergrundstrahlung und/oder für Infrarot-Strahlung wenigstens im Wesentlichen intransparenten Material ausgebildet. Unter "wenigstens im Wesentlichen intransparent" soll insbesondere eine Eigenschaft einer Baueinheit und/oder eines Materials verstanden werden, von auf einer Seite auftreffender Hintergrundstrahlung einen Anteil von mindestens 90 %, insbesondere von mindestens 95 % und vorteilhaft von mindestens 98 % zu reflektieren und/oder zu absorbieren. Unter "intransparent" soll insbesondere opak und/oder undurchlässig verstanden werden. Insbesondere soll unter "Hintergrundstrahlung" jegliche Art von elektromagnetischer Strahlung, insbesondere von Streustrahlung, verstanden werden, die insbesondere in abschirmungslosem Zustand auf den Infrarot-Sensor auftrifft und die von einer durch den Wellenleiter zu dem Infrarot-Sensor geleiteten elektromagnetischen Strahlung, insbesondere Infrarot-Strahlung, verschieden ausgebildet ist. Insbesondere soll unter Hintergrundstrahlung elektromagnetische Strahlung verstanden werden, die von Hausgeräteelementen, die insbesondere von dem Infrarot-Sensor verschieden ausgebildet sind, verursacht ist und die über von dem Wellenleiter verschiedene Wege auf den Infrarot-Sensor trifft. Dadurch kann insbesondere eine präzise Detektion einer von dem Wellenleiter zu dem Infrarot-Sensor geleiteten elektromagnetischen Strahlung erreicht und/oder eine störungsfreie Übertragung der von dem Wellenleiter zu dem Infrarot-Sensor geleiteten elektromagnetischen Strahlung ermöglicht werden.

Das Ende des Wellenleiters und eine durch eine Deckenwand des Abschirmelements aufgespannte Ebene könnten insbesondere in einer senkrecht zu der Ebene ausgerichteten Richtung beabstandet zueinander angeordnet sein, wobei insbesondere das Ende des Wellenleiters einen größeren und/oder vorteilhaft einen kleineren Abstand zu dem Infrarot-Sensor aufweisen könnte als die durch die Deckenwand aufgespannte Ebene. Vorzugsweise sind das Ende des Wellenleiters und eine Deckenwand des Abschirmelements wenigstens im Wesentlichen bündig angeordnet. Unter der Wendung, dass das Ende des Wellenleiters und eine Deckenwand des Abschirmelements "wenigstens im Wesentlichen bündig" angeordnet sind, soll insbesondere verstanden werden, dass die Deckenwand des Abschirmelements eine Ebene aufspannt und das Ende des Wellenleiters zu dieser Ebene einen senkrecht zu der Ebene ausgerichteten Abstand von maximal 1 mm, insbesondere von maximal 0,8 mm, vorteilhaft von maximal 0,5 mm, besonders vorteilhaft von maximal 0,3 mm, vorzugsweise von maximal 0,2 mm und besonders bevorzugt von maximal 0,1 mm aufweist. Dadurch kann das Ende des Wellenleiters insbesondere in einem geringen Abstand zu dem Infrarot-Sensor angeordnet werden, wodurch insbesondere eine verlustfreie Übertragung einer von dem Wellenleiter zu dem Infrarot-Sensor geleiteten elektromagnetischen Strahlung erzielt werden kann. Insbesondere kann eine Beschädigung des Infrarot-Sensors durch das Ende des Wellenleiters vermieden werden.

Zudem wird vorgeschlagen, dass die Verbindungseinheit zumindest ein Befestigungselement aufweist, welches zu einer Befestigung an einer Leiterplatte, insbesondere an der Leiterplatte, vorgesehen ist. Insbesondere ist das Befestigungselement dazu vorgesehen, eine kraftschlüssige und/oder formschlüssige Verbindung zu der Leiterplatte herzustellen. Beispielsweise könnte das Befestigungselement dazu vorgesehen sein, eine Rastverbindung und/oder eine durch Verriegelung hergestellte Verbindung zu der Leiterplatte herzustellen. Insbesondere könnte das Befestigungselement dazu vorgesehen sein, eine Steckverbindung und/oder eine durch Klemmung hergestellte Verbindung zu der Leiterplatte herzustellen. Dadurch kann insbesondere eine stabile Ausgestaltung erreicht werden.

In einer weiteren Ausgestaltung wird ein Verfahren zur Montage einer erfindungsgemäßen Kochfeldvorrichtung mit zumindest einem Wellenleiter und mit zumindest einer Verbindungseinheit vorgeschlagen, wobei ein Ende des Wellenleiters in einer Umgebung eines Infrarot-Sensors mittels der Verbindungseinheit fixiert wird, und wobei das Ende des Wellenleiters in einem Abstand von maximal 4 mm zu dem Infrarot-Sensor mittels der Verbindungseinheit fixiert wird. Dadurch kann insbesondere eine präzise Temperaturermittlung erreicht werden.

Ferner wird vorgeschlagen, dass der Wellenleiter und die Verbindungseinheit vormontiert werden, wodurch insbesondere ein separater Verkauf der Vormontageeinheit, die den Wellenleiter und die Verbindungseinheit umfasst, ermöglicht werden kann, beispielsweise als Ersatzteil.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung in einer schematischen Draufsicht,
- Fig. 2: eine Leiterplatte mit einem Infrarot-Sensor der Kochfeldvorrichtung in einer schematischen Darstellung,
- Fig. 3: eine Verbindungseinheit der Kochfeldvorrichtung in einer schematischen seitlichen Darstellung,
- Fig. 4: die Verbindungseinheit in Ansicht von unten in einer schematischen Darstellung,
- Fig. 5: die Verbindungseinheit in einer schematischen Schnittdarstellung,
- Fig. 6: die Verbindungseinheit und einen Wellenleiter der Kochfeldvorrichtung in einem vormontierten Zustand in einer ersten schematischen Darstellung,
- Fig. 7: die Verbindungseinheit und den Wellenleiter in dem vormontierten Zustand in einer zweiten schematischen Darstellung,
- Fig. 8: die Verbindungseinheit und den Wellenleiter in dem vormontierten Zustand in einer dritten schematischen Darstellung,
- Fig. 9: die Leiterplatte mit dem Infrarot-Sensor und eine Vormontageeinheit bei einer Montage der Kochfeldvorrichtung in einer schematischen Darstellung und
- Fig. 10: die Leiterplatte und die Vormontageeinheit in einem montierten Zustand in einer schematischen Darstellung.

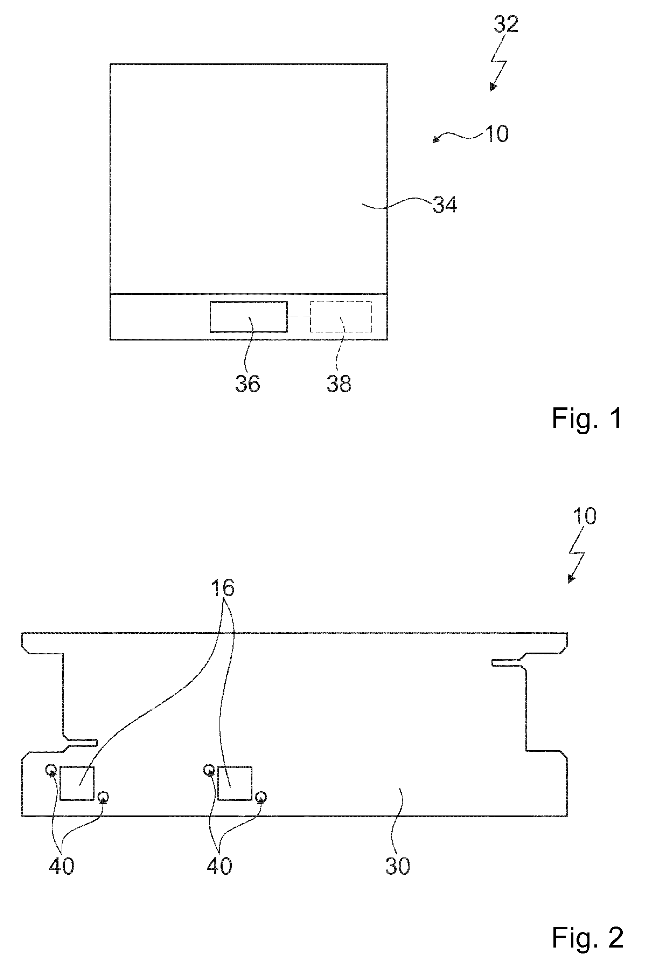

Fig. 1 zeigt ein Kochfeld 32, das als ein Induktionskochfeld ausgebildet ist, mit einer Kochfeldvorrichtung 10, die als eine Induktionskochfeldvorrichtung ausgebildet ist. Die Kochfeldvorrichtung 10 umfasst eine Kochfeldplatte 34. In einem montierten Zustand bildet die Kochfeldplatte 34 einen Teil eines Außengehäuses aus, und zwar insbesondere eines Außengehäuses des Kochfelds 32. Die Kochfeldplatte 34 ist zu einem Aufstellen von Gargeschirr vorgesehen. Zudem umfasst die Kochfeldvorrichtung 10 mehrere Heizelemente (nicht dargestellt), die jeweils dazu vorgesehen sind, auf der Kochfeldplatte 34 oberhalb der Heizelemente aufgestelltes Gargeschirr zu erhitzen.

Die Kochfeldvorrichtung 10 umfasst eine Bedieneinheit 36 zu einer Eingabe und/oder Auswahl von Betriebsparametern, beispielsweise einer Heizleistung und/oder einer Heizleistungsdichte und/oder einer Heizzone. Die Bedieneinheit 36 ist zu einer Ausgabe eines Werts eines Betriebsparameters an einen Bediener vorgesehen. Die Kochfeldvorrichtung 10 umfasst eine Steuereinheit 38, die dazu vorgesehen ist, in Abhängigkeit von mittels der Bedieneinheit 36 eingegebener Betriebsparameter Aktionen auszuführen und/oder Einstellungen zu verändern. Die Steuereinheit 38 regelt in einem Heizbetriebszustand eine Energiezufuhr zu den Heizelementen.

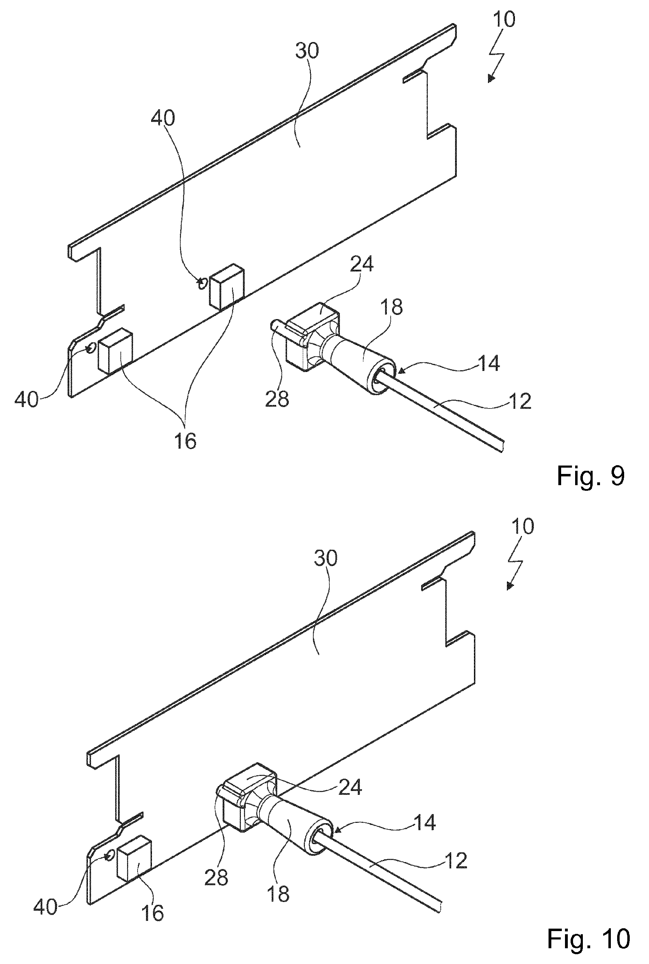

Die Kochfeldvorrichtung 10 umfasst zumindest eine Leiterplatte 30 (vgl. Fig. 2, 9 und 10). Im vorliegenden Ausführungsbeispiel umfasst die Kochfeldvorrichtung 10 mehrere Leiterplatten 30. Alternativ oder zusätzlich ist denkbar, dass die Kochfeldvorrichtung genau eine Leiterplatte umfassen könnte. Im Folgenden wird lediglich eine der Leiterplatten 30 beschrieben. In den Figuren ist die Leiterplatte 30 der Übersichtlichkeit halber vereinfacht dargestellt, wobei lediglich zur Beschreibung benötigte elektrische und/oder elektronische Komponenten dargestellt sind. Die Leiterplatte 30 ist in dem montierten Zustand an einer Gehäuseeinheit (nicht dargestellt) der Kochfeldvorrichtung 10 befestigt.

Die Kochfeldvorrichtung 10 umfasst mehrere Infrarot-Sensoren 16 (vgl. Fig. 2, 9 und 10). In den Figuren sind lediglich zwei Infrarot-Sensoren 16 dargestellt. Von den Infrarot-Sensoren 16 wird im Folgenden lediglich einer beschrieben. In dem montierten Zustand ist der Infrarot-Sensor 16 an der Leiterplatte 30 befestigt. Der Infrarot-Sensor 16 ist in dem montierten Zustand mit einer Leiterbahn (nicht dargestellt) der Leiterplatte 30 kontaktiert. Der Infrarot-Sensor 16 ist an der Leiterplatte 30 mittels einer Lötverbindung befestigt. In einem Betriebszustand ist der Infrarot-Sensor 16 zu einer Detektion von Infrarot-Strahlung vorgesehen. Beispielsweise könnte der Infrarot-Sensor zu einer Detektion von Infrarot-Strahlung vorgesehen sein, welche von einem Gargeschirr emittiert sein könnte, um insbesondere eine Ermittlung einer Temperatur des Gargeschirrs durch die Steuereinheit zu ermöglichen. Alternativ oder zusätzlich könnte der Infrarot-Sensor zu einer Detektion von Infrarot-Strahlung vorgesehen sein, welche bei einer Bedieneingabe mittels der Bedieneinheit insbesondere durch einen Bediener erzeugt sein könnte, um insbesondere eine präzise Erkennung einer Betätigung der Bedieneinheit zu ermöglichen.

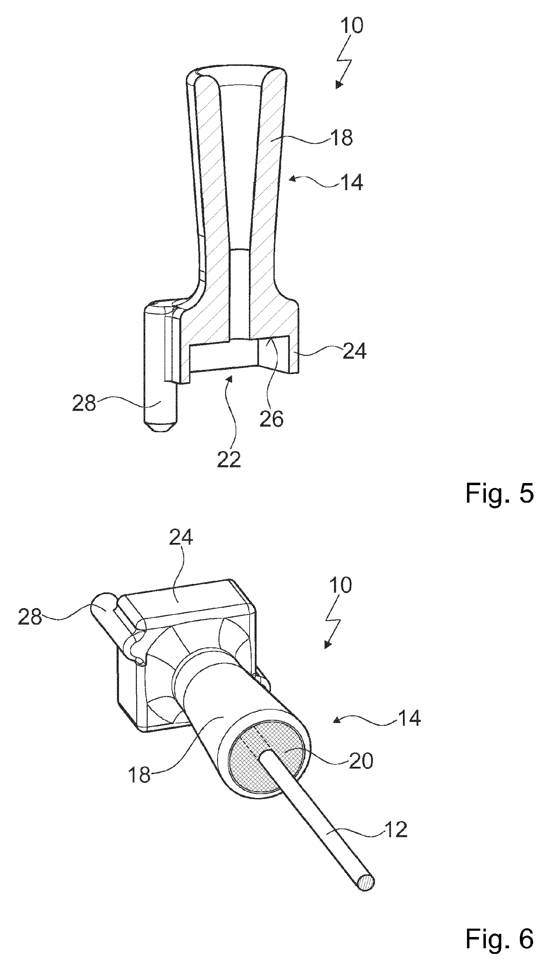

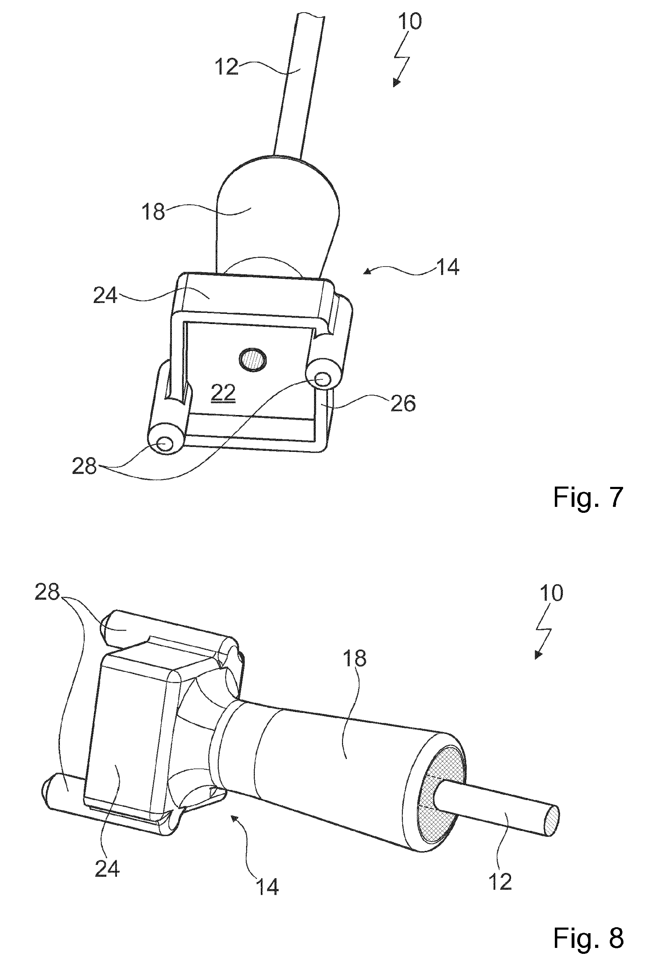

Die Kochfeldvorrichtung 10 umfasst mehrere Wellenleiter 12 (vgl. Fig. 6 bis 10). Von den Wellenleitern 12 ist in den Figuren lediglich einer dargestellt. Im Folgenden wird lediglich einer der Wellenleiter 12 beschrieben. Der Wellenleiter 12 leitet in einem Betriebszustand elektromagnetische Strahlung, insbesondere in Form von Infrarot-Strahlung, zu dem Infrarot-Sensor 16. Ein Ende des Wellenleiters 12 ist in dem montierten Zustand in einer Umgebung des Infrarot-Sensors 16 angeordnet. Ein weiteres Ende des Wellenleiters könnte insbesondere in einem Nahbereich eines Gargeschirrs angeordnet sein, wie beispielsweise in einer Einbaulage unterhalb der Kochfeldplatte und insbesondere in einem Bereich der Heizelemente, wobei das weitere Ende des Wellenleiters insbesondere zu einer Aufnahme von von dem Gargeschirr emittierter Infrarot-Strahlung vorgesehen sein könnte. Alternativ könnte das weitere Ende des Wellenleiters in einem Nahbereich der Bedieneinheit angeordnet sein, wie beispielsweise in einer Einbaulage unterhalb der Kochfeldplatte und insbesondere in einem Bereich der Bedieneinheit.

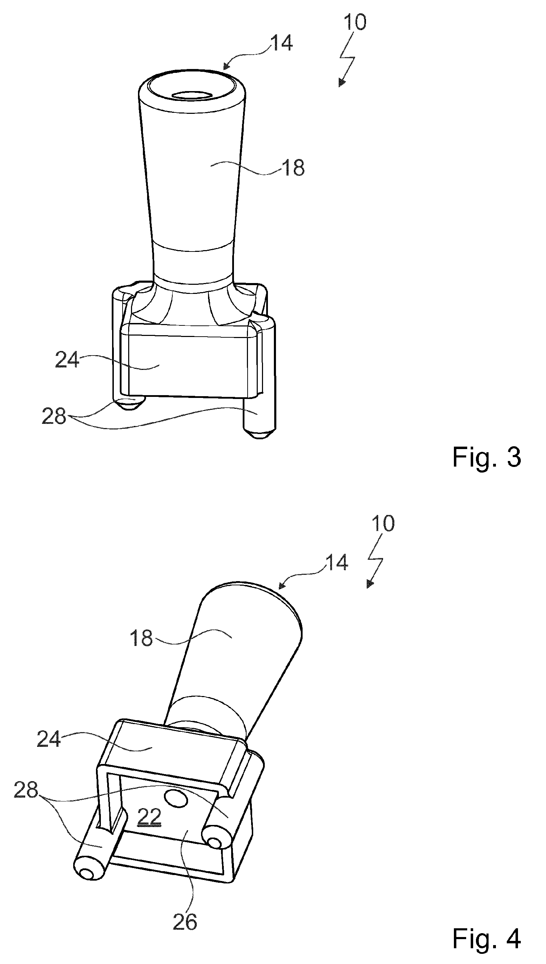

Die Kochfeldvorrichtung 10 umfasst mehrere Verbindungseinheiten 14 (vgl. Fig. 3 bis 10). Von den Verbindungseinheiten 14 ist in den Figuren lediglich eine dargestellt. Im Folgenden wird lediglich eine der Verbindungseinheiten 14 beschrieben. Die Verbindungseinheit 14 fixiert in dem montierten Zustand das Ende des Wellenleiters 12 in der Umgebung des Infrarot-Sensors 16. In dem montierten Zustand fixiert die Verbindungseinheit 14 das Ende des Wellenleiters 12 in einem Abstand von im Wesentlichen 0,2 mm zu dem Infrarot-Sensor 16.

Die Verbindungseinheit 14 weist ein Fixierungselement 18 auf. Das Fixierungselement 18 hält den Wellenleiter 12 in dem montierten Zustand in einer Position relativ zu dem Infrarot-Sensor 16. In dem montierten Zustand hält das Fixierungselement 18 das Ende des Wellenleiters 12 in der Position relativ zu dem Infrarot-Sensor 16. Im vorliegenden Ausführungsbeispiel ist das Fixierungselement 18 im Wesentlichen trichterförmig ausgebildet. Das Fixierungselement 18 weist eine im Wesentlichen trichterförmige Gestalt auf. In dem montierten Zustand ist ein dem Ende des Wellenleiters 12 zugewandter Abschnitt des Wellenleiters 12 in der im Wesentlichen trichterförmigen Gestalt des Fixierungselements 18 angeordnet (vgl. Fig. 6 bis 10).

In dem montierten Zustand ist der Wellenleiter 12 stoffschlüssig in dem Fixierungselement 18 gehalten. Das Ende des Wellenleiters 12 ist in dem montierten Zustand stoffschlüssig in dem Fixierungselement 18 gehalten. In dem montierten Zustand ist der Wellenleiter 12 mittels einer Haltemasse 20 in dem Fixierungselement 18 gehalten (vgl. Fig. 6 bis 10). Das Fixierungselement 18 ist in dem montierten Zustand um den Wellenleiter 12 herum mit der Haltemasse 20 gefüllt. Im vorliegenden Ausführungsbeispiel besteht die Haltemasse 20 zu einem Großteil aus Silikon.

In einem Verfahren zur Montage der Kochfeldvorrichtung 10 wird das Ende des Wellenleiters 12 durch die Verbindungseinheit 14 in der Umgebung des Infrarot-Sensors 16 fixiert. Hierbei wird das Ende des Wellenleiters 12 durch die Verbindungseinheit 14 in einem Abstand von im Wesentlichen 0,2 mm zu dem Infrarot-Sensor 16 fixiert. In dem Verfahren werden der Wellenleiter 12 und die Verbindungseinheit 14 vormontiert. Der Wellenleiter 12 und die Verbindungseinheit 14 bilden eine Vormontageeinheit aus. Die Vormontageeinheit könnte beispielsweise als ein Ersatzteil verkauft werden. Alternativ oder zusätzlich könnte die Vormontageeinheit beispielsweise auf Vorrat in einer Produktionsstätte des Kochfelds gelagert werden, um bei einer Montage der Kochfeldvorrichtung greifbar zu sein und/oder um insbesondere auf eine Montage der Vormontageeinheit verzichten zu können.

Die Verbindungseinheit 14 weist einen Aufnahmebereich 22 auf, der dazu vorgesehen ist, den Infrarot-Sensor 16 zu einem Großteil aufzunehmen (vgl. Fig. 3 bis 10). Der Aufnahmebereich 22 nimmt in dem montierten Zustand einen Detektionsbereich des Infrarot-Sensors 16 auf. In dem montierten Zustand nimmt der Aufnahmebereich 22 einen Bereich des Infrarot-Sensors 16 auf, welcher auf einer Seite der Leiterplatte 30 angeordnet ist, auf welcher sich der Detektionsbereich des Infrarot-Sensors 16 befindet. Eine Öffnung des Aufnahmebereichs 22 und eine Öffnung des Fixierungselements 18 sind an einander gegenüberliegenden Enden des Wellenleiters 12 angeordnet.

Die Verbindungseinheit 14 weist ein Abschirmelement 24 auf, das in dem montierten Zustand den Infrarot-Sensor 16 optisch gegenüber einer Umgebung teilweise abschirmt (vgl. Fig. 3 bis 10). Das Abschirmelement 24 bildet eine Berandung des Aufnahmebereichs 22 auf. Das Abschirmelement 24 weist eine Deckenwand 26 und vier Seitenwände auf. Die Deckenwand 26 und die Seitenwände des Abschirmelements 24 sind miteinander verbunden. Die Verbindungseinheit 14 ist einstückig ausgebildet. Die Deckenwand 26 und die Seitenwände des Abschirmelements 24 sind einstückig aneinander angeformt.

Das Abschirmelement 24 weist eine im Wesentlichen quaderförmige Gestalt auf, welche zu einer Seite hin geöffnet ist. In dem montierten Zustand ist das Abschirmelement 24 der Leiterplatte 30 und dem auf der Leiterplatte 30 montierten Infrarot-Sensor 16 zugewandt. Das Abschirmelement 24 und die Leiterplatte 30 schirmen in dem montierten Zustand den Infrarot-Sensor 16 optisch gegenüber einer Umgebung im Wesentlichen ab.

In dem vormontierten Zustand und ebenso in dem montierten Zustand sind das Ende des Wellenleiters 12 und die Deckenwand 26 des Abschirmelements 24 im Wesentlichen bündig angeordnet. Der Wellenleiter 12 mündet in dem vormontierten Zustand in dem Aufnahmebereich 22. In dem montierten Zustand ist das Ende des Wellenleiters 12 in einem Nahbereich des Detektionsbereichs des Infrarot-Sensors 16 angeordnet.

Die Verbindungseinheit 14 weist zwei Befestigungselemente 28 auf (vgl. Fig. 3 bis 10). Die Befestigungselemente 28 sind an einander diagonal gegenüberliegenden Enden eines dem Infrarot-Sensor 16 und/oder der Leiterplatte 30 in dem montierten Zustand zugewandten Bereichs der Verbindungseinheit 14 angeordnet. In dem montierten Zustand sind die Befestigungselemente 28 an einander diagonal gegenüberliegenden Enden eines dem Wellenleiter 12 abgewandten Bereichs der Verbindungseinheit 14 angeordnet. Von den Befestigungselementen 28 wird im Folgenden lediglich eines beschrieben. Das Befestigungselement 28 ist zu einer Befestigung auf der Leiterplatte 30 vorgesehen. Das Befestigungselement 28 weist eine im Wesentlichen stiftförmige Gestalt auf. In dem montierten Zustand greift das Befestigungselement 28 zumindest in die Leiterplatte 30 ein. Das Befestigungselement könnte in dem montierten Zustand durch die Leiterplatte hindurchgreifen.

Die Leiterplatte 30 weist zumindest eine Befestigungsausnehmung 40 auf (vgl. Fig. 2, 9 und 10). Im vorliegenden Ausführungsbeispiel weist die Leiterplatte 30 pro Infrarot-Sensor 16 zwei Befestigungsausnehmungen 40 auf. Von den Befestigungsausnehmungen 40 wird im Folgenden lediglich eine beschrieben. In dem Verfahren wird das Befestigungselement 28 zu einem Großteil in die Befestigungsausnehmung 40 gesteckt. Das Befestigungselement 28 steckt in dem montierten Zustand zu einem Großteil in der Befestigungsausnehmung 40. Das Befestigungselement 28 ist als ein Pin ausgebildet. In dem montierten Zustand ist das Befestigungselement 28 zu einem Großteil formschlüssig und/oder kraftschlüssig in der Befestigungsausnehmung 40 gehalten.

In dem Verfahren wird der Infrarot-Sensor 16 auf der Leiterplatte 30 befestigt. Die Leiterplatte 30 wird an einer Gehäuseeinheit der Kochfeldvorrichtung 10 befestigt. Die Vormontageeinheit aus Verbindungseinheit 14 und Wellenleiter 12 wird an der Leiterplatte 30 befestigt. Die Vormontageeinheit aus Verbindungseinheit und Wellenleiter könnte beispielsweise vor einer Befestigung des Infrarot-Sensors auf der Leiterplatte montiert werden. Alternativ könnte die Vormontageeinheit aus Verbindungseinheit und Wellenleiter insbesondere nach einer Befestigung des Infrarot-Sensors auf der Leiterplatte und vor einer Befestigung der Vormontageeinheit an der Leiterplatte montiert werden.

### Bezugszeichen

- 10: Kochfeldvorrichtung
- 12: Wellenleiter
- 14: Verbindungseinheit
- 16: Infrarot-Sensor
- 18: Fixierungselement
- 20: Haltemasse
- 22: Aufnahmebereich
- 24: Abschirmelement
- 26: Deckenwand
- 28: Befestigungselement
- 30: Leiterplatte
- 32: Kochfeld
- 34: Kochfeldplatte
- 36: Bedieneinheit
- 38: Steuereinheit
- 40: Befestigungsausnehmung

## Patentansprüche

1. Kochfeldvorrichtung mit zumindest einem Wellenleiter (12) und mit zumindest einer Verbindungseinheit (14), die dazu vorgesehen ist, ein Ende des Wellenleiters (12) in einer Umgebung eines Infrarot-Sensors (16) zu fixieren, **dadurch gekennzeichnet, dass** die Verbindungseinheit (14) dazu vorgesehen ist, das Ende des Wellenleiters (12) in einem Abstand von maximal 4 mm zu dem Infrarot-Sensor (16) zu fixieren.

2. Kochfeldvorrichtung nach Anspruch 1, **dadurch gekennzeichnet, dass** die Verbindungseinheit (14) zumindest ein wenigstens im Wesentlichen trichterförmiges Fixierungselement (18) aufweist, das dazu vorgesehen ist, den Wellenleiter (12) in einer Position relativ zu dem Infrarot-Sensor (16) zu halten.

3. Kochfeldvorrichtung nach Anspruch 2, **dadurch gekennzeichnet, dass** der Wellenleiter (12) stoffschlüssig in dem Fixierungselement (18) gehalten ist.

4. Kochfeldvorrichtung nach Anspruch 3, **dadurch gekennzeichnet, dass** das Fixierungselement (18) um den Wellenleiter (12) herum mit einer Haltemasse (20) aufgefüllt ist.

5. Kochfeldvorrichtung nach einem der vorherigen Ansprüche, **dadurch gekennzeichnet, dass** der Wellenleiter (12) und die Verbindungseinheit (14) wenigstens teilweise eine Vormontageeinheit ausbilden.

6. Kochfeldvorrichtung nach einem der vorhergehenden Ansprüche, **dadurch gekennzeichnet, dass** die Verbindungseinheit (14) zumindest einen Aufnahmebereich (22) aufweist, der vorgesehen ist, den Infrarot-Sensor (16) wenigstens zu einem Großteil aufzunehmen.

7. Kochfeldvorrichtung nach einem der vorherigen Ansprüche, **dadurch gekennzeichnet, dass** die Verbindungseinheit (14) zumindest ein Abschirmelement (24) aufweist, das dazu vorgesehen ist, den Infrarot-Sensor (16) in einem montierten Zustand optisch gegenüber einer Umgebung wenigstens teilweise abzuschirmen.

8. Kochfeldvorrichtung zumindest nach Anspruch 7, **dadurch gekennzeichnet, dass** das Ende des Wellenleiters (12) und eine Deckenwand (26) des Abschirmelements (24) wenigstens im Wesentlichen bündig angeordnet sind.

9. Kochfeldvorrichtung nach einem der vorherigen Ansprüche, **dadurch gekennzeichnet, dass** die Verbindungseinheit (14) zumindest ein Befestigungselement (28) aufweist, welches zu einer Befestigung an einer Leiterplatte (30) vorgesehen ist.

10. Kochfeld, insbesondere Induktionskochfeld, mit zumindest einer Kochfeldvorrichtung (10) nach einem der vorhergehenden Ansprüche.

11. Verfahren zur Montage einer Kochfeldvorrichtung (10) nach einem der Ansprüche 1 bis 9, mit zumindest einem Wellenleiter (12) und mit zumindest einer Verbindungseinheit (14), wobei ein Ende des Wellenleiters (12) in einer Umgebung eines Infrarot-Sensors (16) mittels der Verbindungseinheit (14) fixiert wird, **dadurch gekennzeichnet, dass** das Ende des Wellenleiters (12) in einem Abstand von maximal 4 mm zu dem Infrarot-Sensor (16) mittels der Verbindungseinheit (14) fixiert wird.

12. Verfahren nach Anspruch 11, **dadurch gekennzeichnet, dass** der Wellenleiter (12) und die Verbindungseinheit (14) vormontiert werden.
